# Europäisches Patentamt

## European Patent Office

## Office européen des brevets

(11) Publication number: **0 134 334**
**B1**

(12) **EUROPEAN PATENT SPECIFICATION**

(45) Date of publication of patent specification: **30.09.87**

(51) Int. Cl.⁴: **B 01 J 29/06**

(21) Application number: **83304720.2**

(22) Date of filing: **15.08.83**

(54) Treatment of zeolites.

(43) Date of publication of application:
**20.03.85 Bulletin 85/12**

(45) Publication of the grant of the patent:
**30.09.87 Bulletin 87/40**

(84) Designated Contracting States:
**BE DE FR GB IT NL SE**

(56) References cited:
**US-A-3 644 220**
**US-A-4 361 713**
**US-A-4 374 296**

(73) Proprietor: **MOBIL OIL CORPORATION**
**150 East 42nd Street**
**New York New York 10017 (US)**

(72) Inventor: **Miale, Joseph Nicolas**
**25 Merritt Drive**
**Lawrenceville, NJ 08648 (US)**
Inventor: **Chang, Clarence Dayton**
**11 Murray Place**
**Princeton, NJ 08540 (US)**

(74) Representative: **Grundy, Derek George Ritchie
et al**
**CARPMAELS & RANSFORD 43, Bloomsbury
Square**
**London WC1A 2RA (GB)**

Courier Press, Leamington Spa, England.

## Description

This invention relates to a method for enhancing the activity of zeolite-containing catalysts, in particular those in which the zeolite is very highly siliceous.

The ion exchange capacity of a crystalline zeolite is directly dependent on its aluminum content; the more aluminum there is in a crystalline structure of the zeolitic kind, the more cations are required to balance the electro-negativity thereof, and when such cations are of the acidic type, such as hydrogen, they impart high catalytic activity. On the other hand, highly siliceous zeolites having little or substantially no aluminum have many important properties and a high degree of structural stability and have become candidates for use in various processes including catalytic processes. Materials of this type include zeolites such as ZSM-5 (US—A—3,702,886), ZSM-11 (US—A—3,709,979), and ZSM-12 (US—A—3,832,449) to mention a few.

The silica-to-alumina ratio of a zeolite is often variable; for example, zeolite X can be synthesized with a silica-to-alumina ratio of from 2 to 3; zeolite Y from 3 to about 6. In some zeolites, however, the upper limit of silica-to-alumina ratio is virtually infinite. Zeolite ZSM-5 is one such material, its minimum silica-to-alumina ratio being 5. US—A—3,941,871 discloses a crystalline zeolite essentially free of aluminum and exhibiting an x-ray diffraction pattern characteristic of ZSM-5. US—A—4,061,724, 4,073,865 and 4,104,294 describe microporous crystalline silicas or organosilicates of which the aluminum content is at impurity level.

Because of the extremely low aluminum content of these highly siliceous zeolites their ion exchange capacity is correspondingly low. Therefore when exchanged and processed in conventional manner they are not as catalytically active as their higher aluminum-containing counterparts.

The invention permits the preparation of catalysts from highly siliceous zeolites which have all the desirable properties inherently possessed by such materials yet have an acid activity which heretofore has only been manifested by materials having a higher aluminum content in their "as synthesized" form.

US—A—3,354,078 and 3,644,220 relate to treating crystalline aluminosilicates of silica/alumina ratio well below 100 with volatile metal halides.

According to the present invention a method of enhancing the activity of a catalyst comprising from 25 to 75% by weight of a crystalline zeolite having an initial ion exchange capacity less than 0.7 meq/g and having 75 to 25% by weight of an alumina and/or gallia matrix comprises calcining the catalyst at 200 to 600°C for from 1 minute to 48 hours, saturating the catalyst with dry boron fluoride vapor, and converting the zeolite in the catalyst to the hydrogen form.

The resulting zeolite catalysts exhibit enhanced Bronsted acidity and, therefore, improved acid activity toward catalysis of numerous chemical reactions, such as for example cracking of organic, e.g. hydrocarbon, compounds.

The silica-to-alumina ratio of the zeolites employed according to the invention is greater than 100 and more preferably greater than 500, up to and including those cases where the silica-to-alumina ratio is infinite or effectively so. This latter group of highly siliceous zeolites is exemplified by the aforementioned U.S.—A—3,941,871, 4,061,724, 4,073,865 and 4,104,294 wherein the zeolites are prepared from reaction mixtures which involve no deliberate addition to aluminum. However, trace quantities of aluminum are usually present as impurity in the reagents. The invention also embraces the use of zeolites which have other lattice elements besides silica and/or alumina associated therewith, such as boron, iron or chromium.

Zeolites which can exist in the high siliceous form contemplated by the invention and which have pores sufficiently wide to admit boron fluoride include zeolites ZSM-5, -11 and -12, defined respectively by the x-ray diffraction data set forth in US—A—3,702,886, 3,709,979 and 3,832,449.

The method of this invention is simple and easy to carry out although the results are dramatic. One method advantageously comprises compositing the highly siliceous zeolite with a support matrix material consisting of alumina and/or gallia and calcining the composite at 200°C to 600°C in an atmosphere of air, nitrogen or the like at atmospheric, superatmospheric or subatmospheric pressure for between 1 minute and 48 hours. The calcined composite is thereafter treated with boron fluoride vapor at a temperature of from about 0°C to about 100°C, preferably from about ambient to about 50°C, in a dry environment. The boron fluoride treated material is then purged with dry gas (air, helium, etc.) and hydrolyzed by contact with water at a temperature of from about 20°C to about 550°C. When the hydrolyzing temperature exceeds 100°C at atmospheric pressure, the purging may be with water saturated gas, e.g. helium. The hydrolyzed material is then contacted with an ammonium salt solution, e.g. 1N $NH_4NO_3$, and thereafter calcined at a temperature of from about 200°C to about 600°C in an inert atmosphere (air, nitrogen, etc.) at subatmospheric, atmospheric or superatmospheric pressure for from about 1 minute to about 48 hours. The zeolite will have been converted to the hydrogen form by this procedure.

The boron fluoride contacting step may be accomplished by admixture of boron fluoride or boron fluoride etherate with an inert gas such as nitrogen or helium at temperatures ranging from about 0°C to about 100°C, preferably from about ambient to about 50°C. The amount of boron fluoride vapor which is utilized is not narrowly critical but usually from about 0.2 to about 2 grams of boron fluoride are used per gram of zeolite in the composite.

The ammonium salt solution contacting step may be conducted with an aqueous or non-aqueous solution of an ammonium salt, e.g. $NH_4NO_3$, for a period of time of from about 1 hour to about 20 hours at a temperature of from ambient to about 100°C. The ammonium salt used is not critical and will normally be an inorganic salt such as ammonium nitrate, ammonium sulfate, ammonium chloride, etc. The hydrolysis and ammonium salt solution contacting steps may be conducted simultaneously when the ammonium salt solution is aqueous.

The use of boron fluoride in the presence of siliceous materials has been avoided in the past because it is easily hydrolyzed and the HF thereby released attacks silica. We have discovered, however, that the boron fluoride contacting step of the present invention, when conducted carefully with regard to moisture content of the system and contact time, avoids the noted problem. Therefore, the boron fluoride contacting step of this invention must be carried out in a dry system after the material to be contacted has been calcined. Once the boron fluoride saturation point is reached in the composite being treated the flow of boron fluoride should be stopped and the next operations commenced without undue delay. The saturation point can be determined by observing evolution of heat of adsorption during the boron fluoride contacting step. Saturation is indicated when the temperature of the bed of material being contacted with the boron fluoride levels and begins to decrease.

This matrix material may be in the form of a gel, if desired, and the relative proportion of zeolite and matrix on an anhydrous basis, may vary with the zeolite content ranging from about 25 to 75 weight percent of the dry composite.

Catalysts prepared according to the invention are useful in acid catalyzed organic compound conversion reactions such as cracking of hydrocarbons, wherein the reaction conditions include a temperature of from about 300°C to about 800°C, a pressure of from about 15 psia to about 500 psia (1 to 34.5 bar), and a weight hourly space velocity of from about 0.1 to about 20; and conversion of methanol to gasoline wherein the reaction conditions include a temperature of from about 300°C to about 550°C, a pressure of from about 5 psia to about 500 psia (0.35 to 34.5 bar), and a weight hourly space velocity of from about 0.1 to about 100. It may be useful to incorporate the above-described catalyst in a further matrix comprising another material resistant to the temperature and other conditions employed in the process. Such matrix material is useful as a binder and imparts additional resistance to the catalyst for the severe temperature, pressure and reactant feed stream velocity conditions encountered in many cracking processes. Useful additional matrix materials include those described in our EP—A 1695.

The relative proportions of activity enhanced supported zeolite component and additional matrix, on an anhydrous basis, may vary widely with the zeolite content of the supported zeolite component ranging from about 1 to about 99 percent by weight and more usually in the range of about 5 to about 80 percent by weight of the total dry composite.

The following examples illustrate the invention.

Example 1 (Comparative)

Zeolite ZSM-5, prepared from a reaction mixture containing tetraalkylammonium ions and having a silica-to-alumina mole ratio of about 26,000:1 (65 ppm framework alumina, 110 ppm bulk alumina and 0.23 percent sodium), was calcined for 30 minutes at 538°C. The zeolite was composited and extruded with Kaiser alumina ($Al_2O_3$) to provide an extrudate of 65 wt. % ZSM-5 and 35 wt. % $Al_2O_3$. The extrudate exhibited an Alpha Value of 0.015.

Example 2 (Comparative)

A sample of low sodium zeolite ZSM-5 having a silica-to-alumina mole ratio of about 70:1 was calcined for 30 minutes at 538°C. The calcined zeolite exhibited an Alpha Value of 216.

Example 3

An aliquot of extrudate of Example 1 was calcined for 30 minutes at 538°C and saturated with $BF_3$ at ambient temperature. The sample heated up due to $BF_3$ adsorption; at the saturation point, the sample began to cool. At this point the $BF_3$ flow was stopped and the extrudate bed purged with dry air for 30 minutes. The extrudate sample was then heated at 130°F to drive off any residual unreacted $BF_3$ and reaction moisture. The extrudate underwent three consecutive treatments with aqueous 1N $NH_4NO_3$ and was then washed with water, dried at 130°C and calcined at 538°C for 30 minutes.

Example 4 (Comparative)

An aliquot of extrudate from Example 1 was calcined for 30 minutes at 538°C and, without a boron fluoride contacting step, exchanged under reflux conditions with aqueous 1N $NH_4NO_3$ for 3 hours. The calcination and exchange steps were repeated followed by a final calcination at 538°C for 30 minutes.

Example 5

An aliquot of ammonium exchanged extrudate product of Example 4 was treated according to the procedure set forth in Example 3.

Example 6

An aliquot of ammonium exchanged extrudate product of Example 4 was treated according to the procedure set forth in Example 3, except that water was used in place of the $NH_4NO_3$.

3

Example 7 (Comparative)

A sample of the zeolite ZSM-5 used in preparation of the extrudate in Example 1, without the compositing with alumina and extrudation, was treated by the procedure set forth in Example 3.

Example 8 (Comparative)

An aliquot of the low sodium zeolite of Example 2 was treated according to the procedure set forth in Example 3, except that no $NH_4NO_3$ contact was conducted.

Example 9 (Comparative)

An aliquot of the zeolite product of Example 8 was hydrolyzed in water for 3 hours, dried at 130°C and then calcined at 538°C for 30 minutes.

Example 10 (Comparative)

An aliquot of the zeolite product of Example 8 was treated according to the procedure set forth in Example 3.

Example 11 (Comparative)

A sample of steamed zeolite ZSM-5 prepared from a reaction mixture containing tetraalkylammonium ions and having a silica-to-alumina mole ratio of 70:1 was composited and extruded with alumina to provide an extrudate of 65 wt. % ZSM-5 and 35 wt. % $Al_2O_3$. The product extrudate exhibited an Alpha Value of 19. This extrudate was then treated as in Example 3.

The products of Examples 1 and 3 to 11 were subjected to the Alpha Test. Constraint indices for the final products of Example 3, 5 and 6 were also measured. The results of these tests are listed below:

| Example | Alpha value | Constraint index |
|---------|-------------|------------------|
| 1 | 0.015 | — |
| 3 | 23 | 1.8 |
| 4 | 16 | — |
| 5 | 55 | 1.8 |
| 6 | 62 | 1.8 |
| 7 | 0.8 | — |
| 8 | 1.4 | — |
| 9 | 40 | — |
| 10 | 3.4 | — |
| 11 | 12 | — |

It is observed from the above results that the present method is highly useful for enhancing acid catalytic activity only for high silica zeolites, i.e. those having a silica-to-alumina mole ratio greater than 100, which have been composited with a support matrix.

The Alpha Test is described in The Journal of Catalysis, Vol. IV, pp. 522—529 (August 1965). The Constraint Index is a measure of the selectivity of a zeolite and is described in The Journal of Catalysis, Volume 67, pp. 218—222 (1981). Zeolites to which the present invention is applicable advantageously have a constraint index in the range 1 to 12.

**Claims**

1. A method of enhancing the activity of a catalyst comprising from 25 to 75% by weight of a crystalline zeolite having an initial ion exchange capacity less than 0.7 meq/g and from 75 to 25% weight of an alumina and/or gallia matrix, which method comprises calcining the catalyst at 200 to 600°C for from 1 minute to 48 hours, saturating the catalyst with dry boron fluoride vapor, and converting the zeolite in the catalyst to the hydrogen form.

2. A method according to claim 1 wherein the zeolite has an initial silica/alumina ratio greater than 500.

3. A method according to claim 1 or claim 2 wherein the zeolite is converted to the hydrogen form by exchange with an aqueous solution of an ammonium salt followed by calcination.

4

4. A method according to any preceding claim wherein the catalyst is saturated by contact with flowing boron fluoride vapor at a temperature of 0°C to 100°C.

5. A method according to any preceding claim wherein the catalyst is purged of boron fluoride immediately after saturation therewith.

6. A method according to any preceding claim wherein the boron fluoride vapor used to saturate the catalyst is in admixture with an inert gas.

7. A method according to any preceding claim wherein there is employed for the saturating from 0.2 to 2 g of boron fluoride per gram of zeolite.

8. Use in the conversion of organic compounds of a catalyst prepared by the method claimed in any of claims 1 to 7.

**Patentansprüche**

1. Verfahren zur Erhöhung der Wirksamkeit eines Katalysators, der von 25 bis 75 Gew.-% eines kristallinen Zeoliths mit einer Anfangsionenaustauschkapazität von weniger als 0,7 Milliäquivalent/g und von 75 bis 25 Gew.-% einer Aluminiumoxid- und/oder Galliumoxidmatrix umfaßt, bei dem der Katalysator bei 200 bis 600°C während einer Minute bis 48 Stunden kalziniert wird, der Katalysator mit trockenem Borfluoriddampf gesättigt wird und der Zeolith im Katalysator in die Wasserstoffform umgewandelt wird.

2. Verfahren nach Anspruch 1, worin der Zeolith ein Anfangs-Siliziumdioxid/Aluminiumoxid-Verhältnis von größer als 500 aufweist.

3. Verfahren nach Anspruch 1 oder 2, worin der Zeolith durch Austausch mit einer wässrigen Lösung eines Ammoniumsalzes, gefolgt von Kalzinierung in die Wasserstoffform umgewandelt wird.

4. Verfahren nach einem der vorstehenden Ansprüche, worin der Katalysator durch Kontakt mit strömendem Borfluoriddampf bei einer Temperatur von 0°C bis 100°C gesättigt wird.

5. Verfahren nach einem der vorstehenden Ansprüche, worin der Katalysator unmittelbar nach seiner Sättigung mit Borfluorid davon gereinigt wird.

6. Verfahren nach einem der vorstehenden Ansprüche, worin der zur Sättigung des Katalysators verwendete Borfluoriddampf eine Mischung mit einem Inertgas ist.

7. Verfahren nach einem der vorstehenden Ansprüche, worin zur Sättigung von 0,2 bis 2 g Borfluorid pro Gramm des Zeoliths eingesetzt werden.

8. Verwendung des Katalysators, der nach dem Verfahren nach einem der Ansprüche 1 bis 7 hergestellt wurde, zur Umwandlung von organischen Verbindungen.

**Revendications**

1. Un procédé pour améliorer l'activité d'un catalyseur comprenant 25 à 75% en poids d'une zéolite cristalline présentant une capacité d'échange ionique initiale inférieure à 0,7 méq/g et contenant de 75 à 25% en poids d'un support ou matrice à base d'alumine et/ou d'oxyde de gallium, ce procédé consistant à calciner le catalyseur à une température comprise entre 200°C et 600°C, pendant 1 minute à 48 heures, à saturer le catalyseur par une vapeur de fluorure de bore sèche et à convertir sous forme protonée la zéolite dans le catalyseur.

2. Un procédé selon la revendication 1, dans lequel la zéolite présente un rapport initial silice/alumine supérieur à 500.

3. Un procédé selon la revendication 1 ou la revendication 2, dans lequel la zéolite est convertie en la forme protonée par échange avec une solution aqueuse d'un sel d'aluminium suivi d'une calcination.

4. Un procédé selon l'une quelconque des revendications précédentes, dans lequel le catalyseur est saturé par contact avec une vapeur de fluorure de bore circulant à une température de 0°C à 100°C.

5. Un procédé selon l'une quelconque des revendications précédentes, dans lequel le catalyseur est purgé du fluorure de bore immédiatement après qu'il ait été saturé par ce produit.

6. Un procédé selon l'une quelconque des revendications précédentes, dans lequel la vapeur de fluorure de bore utilisée pour saturer le catalyseur est associée à un gaz inerte.

7. Un procédé selon l'une quelconque des revendications précédentes, dans lequel on emploie pour la saturation de 0,2 à 2 g de fluorure de bore par gramme de zéolite.

8. Application pour la conversion de composés organiques d'un catalyseur préparé selon le procédé revendiqué dans l'une quelconque des revendications 1 à 7.